Europäisches Patentamt

European Patent Office

Office européen des brevets

(19)

(11) Veröffentlichungsnummer: **0 515 791 A2**

# (12) EUROPÄISCHE PATENTANMELDUNG

(21) Anmeldenummer: **92104925.0**

(22) Anmeldetag: **21.03.92**

(51) Int. Cl.5: **B23F 19/06**, B23F 19/00, B23F 23/00

(30) Priorität: **02.05.91 DE 4114341**
**31.08.91 DE 4129024**

(43) Veröffentlichungstag der Anmeldung:
**02.12.92 Patentblatt 92/49**

(84) Benannte Vertragsstaaten:
**CH DE FR GB IT LI**

(71) Anmelder: **WERA WERK HERMANN WERNER GmbH & CO.**
**Korzerter Strasse 21**
**W-5600 Wuppertal 12(DE)**

(72) Erfinder: **Garschagen, Friedrich Albert**
**Am Hasenclev 7**
**W-5630 Remscheid(DE)**
Erfinder: **Heym, Hans-Udo**
**Am Waldsaum 13**
**W-5600 Wuppertal 11(DE)**

(74) Vertreter: **Rieder, Hans-Joachim, Dr. et al**
**Rieder & Partner Corneliusstrasse 45**
**Postfach 11 04 51**
**W-5600 Wuppertal 11(DE)**

(54) Vorrichtung und Verfahren zum Schaben von Zahnrädern mit elektronisch gekoppelten Einzelantrieben für Werkstück und Werkzeug.

(57) Die Erfindung betrifft eine Vorrichtung zum Feinbearbeiten (Schaben) der Verzahnung von Zahnrädern, mit einer Halterung für ein Werkzeugrad und einem Futter für ein im Gleichlauf dazu laufendes zu bearbeitendes Zahnrad (Werkstück) und schlägt zur Erzielung einer insbesondere gebrauchsvorteilhaften Lösung vor, daß das Werkstück (7) auf der Welle (2) eines eigenen elektrischen Drehantriebes aufnehmbar ist und daß die Drehantriebe für das als Schabrad (8) gestaltete Werkzeug und das Werkstück (7) als elektrisch gekoppelte Einzelantriebe (3, 4) ausgebildet sind, derart, daß ihr Gleichlauf über eine elektronische Zwanglaufsteuerung in kleineren Schritten als die Höhe (h) der Schabrippen (5) des Schabrades (8) variierbar ist.

Das erfinderische Verfahren wird dadurch gekennzeichnet, daß das Verhältnis zwischen Werkstückdrehzahl und Werkzeugdrehzahl geringfügig größer oder kleiner als das Übersetzungsverhältnis von Schabrad und Werkrad ist, so daß durch das verdrehende Zustellen von Werkzeug relativ zum Werkstück die Spanabnahme nur jeweils lediglich an einer der Zahnseiten erfolgt.

FIG.1

EP 0 515 791 A2

Die Erfindung betrifft eine Vorrichtung zum Feinbearbeiten von der Verzahnung von Zahnrädern, mit einer Halterung für ein Werkzeugrad und einem Futter für ein im Gleichlauf dazu laufendes zu berarbeitendes Zahnrad (Werkstück), wobei eine Relativverlagerung zwischen drehantreibbarem Werkzeug und drehantreibbarem Werkstück zueinander gegeben ist, derart, daß die Achsen von Werkstück und Werkzeug sich beabstandend kreuzen.

Eine gattungsgemäße Vorrichtung ist bekannt aus der europäischen Patentanmeldung 01 92 817. Dort ist eine Vorrichtung zum Feinbearbeiten (Honen) von Kegelrädern offenbart. Die dort offenbarte Vorrichtung arbeitet nach dem sogenannten Tauchverfahren, d. h. die Zahnflanken der Werkstückverzahnung werden ohne ein Längsverschieben des Werkzeugs relativ zum Werkstück geschliffen. Mittels eines verschiebbaren Zahnradgetriebes ist ein relatives Verdrehen des Werkstücks gegenüber dem Werkzeug möglich, so daß entsprechend der Verdrehrichtung jeweils die eine oder die andere Zahnflanke eines Zahnes des zu bearbeitenden Zahnrades feinbearbeitet werden kann, ohne daß die Drehrichtung des Werkzeugs oder Werkstücks geändert werden muß. Die bekannte Vorrichtung ist einerseits fertigungstechnisch sehr aufwendig und andererseits in ihrem Einsatzbereich sehr beschränkt, nämlich auf Kegelräder.

Der Erfindung liegt demnach die Aufgabe zugrunde, eine gattungsgemäße Vorrichtung gebrauchsvorteilhaft weiterzubilden.

Gelöst wird die Aufgabe dadurch, daß das Werkstück auf der Welle eines eigenen elektrischen Drehantriebes aufnehmbar ist und daß die Drehantriebe für das als Schabrad gestaltete Werkzeug und das Werkstück als elektrisch gekoppelte Einzelantriebe ausgebildet sind, derart, daß ihr Gleichlauf über eine elektronische Zwanglaufsteuerung in kleineren Schritten als die Höhe der Schabrippen des Schabrades variierbar ist.

Die Unteransprüche stellen vorteilhafte Weiterbildungen der Erfindung dar.

Zufolge der erfinderischen Ausgestaltung ist eine gattungsgemäße Vorrichtung gegeben, welche ein großes Einsatzspektrum aufweist. Durch den Wegfall eines mechanischen Getriebezuges zwischen dem Werkzeug-Drehantrieb und dem Werkstück-Drehantrieb ist eine vereinfachte Einstellung der Werkstückposition gegenüber der Werkzeugposition gegeben. Der Gleichlauf, welcher ein ineinandergreifen der Zähne des verzahnten Werkzeugs in die Verzahnung des Zahnrades gewahrleistet wird durch die elektronische Zwanglaufsteuerung erreicht. Durch die Variierbarkeit des Gleichlaufs ist eine Phasenverschiebung zur normalen Mitlaufbedingung (Übersetzungsverhältnis) möglich. D. h. das Schabrad kann seiner dem Übersetzungsverhältnis entsprechenden Mitlaufdrehbewegung und einen gewissen Winkelgrad vorauseilen oder um einen gewissen Winkelgrad nacheilen. Aufgrund der Drehangetriebenheit beider Räder wird durch die so erreichte Phasenverschiebung eine Kraftbeaufschlagung des Werkzeugs auf eine Zahnflanke des Werkstücks bewirkt. Aufgrund der sehr feinen Drehzustellbarkeit des Werkzeugs zum Werkstück, welche kleiner ist als die Höhe der Schabrippen des Schabrades, ist von der elektronischen Zwanglaufsteuerung der Gleichlauf auch phasenverschoben regelbar, so daß ein gleichmäßiges Abtragen von Material an den Zahnflanken über den gesamten Umfang des Rades verteilt gewährleistet ist. Die Drehzustellung kann dann quasi kontinuierlich durchgeführt werden. Gemäß einer bevorzugten Weiterbildung der Erfindung ist der Gleichlauf entsprechend einer variierbaren Vorschubstellung des Werkstücks von der Zwanglaufsteuerung variierbar. Wird beispielsweise das Schabrad von einem Master-Antrieb angetrieben und das Zahnrad von der Zwanglaufsteuerung entsprechend als Slave-Antrieb nachgeregelt, so ist durch diese Weiterbildung ermöglicht, daß beispielsweise eine Phasenverschiebung der Werkstückdrehung zusätzlich von einer Vorschubstellung des Werkstücks als weiteren Master-Antrieb abhängen kann. Bevorzugt wird eine solche Vorschubstellung von einer parallelen Verlagerung des Werkstücks in Richtung seiner Drehachse ausgebildet. Hierdurch wird quasi der Flankenbearbeitungsort axial verlagert. Im Wege der von dieser axialen Verlagerung abhängigen Gleichlaufvariation, ist ein entsprechend der axialen Stellung variierbares Abtragen einer Zahnflanke ermöglicht. Auf diese Art und Weise sind sondergeformte Zahnflanken, beispielsweise ballig geformte Zahnflanken in einfacher Weise herstellbar. Die Phasenverschiebung kann dann hierzu z.B. bei der Bearbeitung der äußeren Flankenbereiche größer sein als im mittleren Bereich. Eine ebenfalls bevorzugte Weiterbildung der Erfindung sieht vor, daß der Eingriffspunkt des Werkzeuges am Zahn des Werkstücks ganz allgemein von der Zwangssteuerung variierbar ist. Dies kann beispielsweise durch eine tangentiale Verlagerung des Schabrades gegenüber dem Zahnrad erreicht werden, so insbesondere durch den Schiftachsenantrieb. Bezeichnet man beispielsweise die die Zentren der beiden Räder verbindende Achse als Zentrumsachse, so können Werkstück und Werkzeug auch relativ quer zu dieser Zentrumsachse verlagert werden. Gemäß einer weiteren bevorzugten Ausgestaltung der Erfindung lassen sich Werkstück oder Werkzeug auch in Richtung dieser Achse verlagern, so daß eine Abstandsvariation des Werkstücks zum Zentrum des Werkzeuges möglich ist. Beide Zustellarten können auch überlagert sein. Erfindungsgemäß können diese Zustellbewegungen die sowohl vom Werkstück als auch in kinematischer Umkehr vom Werkstück durchgeführt werden, von der Zwangssteuerung angesteuert werden. Von der Zwangsteuerung variierbar ist in vorteilhafter Weise auch die Zustellung des Werkstückes durch Verschwenken der Werkstückachse um eine zu ihr und zur Zentrumsachse quer angeordneten Achse. Auch diese Zustellung ermöglicht eine Verlagerung des Eingriffspunktes des Werkzeugs am Zahn des Werkstücks und so die Fertigung von sondergeformten Zahnflanken. Die quer zueinander angeordneten Achsen müssen dabei nicht notwendigerweise senkrecht aufeinanderstehen. Die Schwenkachse kann also auch in einem Winkel größer oder kleiner als 90° zur Zentrumsachse angeordnet sein. Eine besonders feinfühlige Einstellung der Phasenverschiebung wird dadurch erzielt, daß der Motor einer der elektrisch gekoppelten Einzelantriebe um seine Achse schwenkbar ist. Die durch eine Schwenkbewegung dem Motor aufgezwungene Drehung addiert sich so zur Wellendrehung, was die Gleichlaufvariation bewirkt. Ebenfalls vorgesehen ist es, die Gleichlaufvariation Wege eines zwischen Motor und Schabrad bzw. Werkstück geschalteten Differenzialgetriebes zu bewirken. Entsprechend einer Drehung des Steges oder Gehäuses des Differenzialgetriebes wird der Welle eine Phasenverschiebung auferlegt. Neben einer schrittweisen Variation des Gleichlaufs, also einer schrittweisen Vergrößerung bzw. Verkleinerung der Phasenverschiebung ist auch vorgesehen, daß der Gleichlauf kontinuierlich variiert wird, d. h. die Phasenverschiebung ändert sich kontinuierlich. Dies entspricht dann einem leicht asynchronen Lauf von Werkzeug und Werkstück. Das Drehzahlverhältnis der beiden Wellen entspricht also nicht exakt dem Zahnverhältnis von Zahnrad und Schabrad, sondern weicht hiervon - jedoch in äußerst geringem Maße - ab. Eine äußerst gleichmäßige und genau einstellbare Bearbeitung der Zahnflanken wird durch eine Weiterbildung der Erfindung erzielt, bei der die elektronische Zwanglaufsteuerung nicht von dem CNC-Prozeßrechner selbst durchgeführt wird, sondern von einem separaten Steurerrechner, welcher lediglich eine Drehzahl bzw. Einzelstellungsvorgabe vom CNC-Prozeßrechner erhält und selbsttätig die Nachregelung der gesteuerten Welle besorgt. Eine Regelgeschwindigkeit von einer Millisekunde ist hierdurch erzielbar. Entsprechend kann die Vorrichtung bei Einhaltung einer notwendigen Genauigkeit mit hohen Drehzahlen arbeiten. Insbesondere die Herstellung von schräg verzahnten Zahnrädern wird durch eine Weiterbildung der Erfindung ermöglicht, bei der die Werkzeugachse um die Zentrumsachse schwenkbar und feststellbar ist, wobei die Zentrumsachse rechtwinkelig zur Drehachse des Werkstücks verlaufen kann und die Werkzeugachse rechtwinklig schneiden kann. Ein günstiges Entfernen der entstandenden Späne kann dann ermöglicht sein, wenn Werkstück und Werkzeug horizontal nebeneinander angeordnet sind. Bei entsprechender Drehrichtung können dann die Späne nach unten ausfallen. Neben der Vorrichtung betrifft die Erfindung auch ein Verfahren zum Feinbearbeiten der Verzahnung von Zahnrädern, wobei das Verhältnis zwischen Werkstückdrehzahl und Werkzeugdrehzahl geringfügig größer oder kleiner als das Übersetzungsverhältnis von Schabrad und Werkrad ist, so daß durch das verdrehende Zustellen von Werkzeug relativ zum Werkstück die Spanabnahme lediglich an einer der Seiten erfolgt. Insbesondere bei horizontal nebeneinander angeordnetem Werkstück und Werkzeug ist durch dieses Verfahren sichergestellt, daß die Späne immer nach unten ausfallen können. Beim Wechseln der zu bearbeitenden Flanken braucht der Drehsinn nicht geändert zu werden.

Anhand beigefügten Zeichnungen wird ein Ausführungsbeispiel der Erfindung nachstehend erläutert.

Es zeigen:

Fig. 1      eine schematische Darstellung einer erfindungsgemäßen Vorrichtung,

Fig. 2      eine um 90° gedrehte Darstellung gemäß Figur 1,

Fig. 3      Beispiele von Zahnflanken,

Fig. 4      ein Steuerungsschema und

Fig. 5      einen Umfangsbereich eines Schabrades.

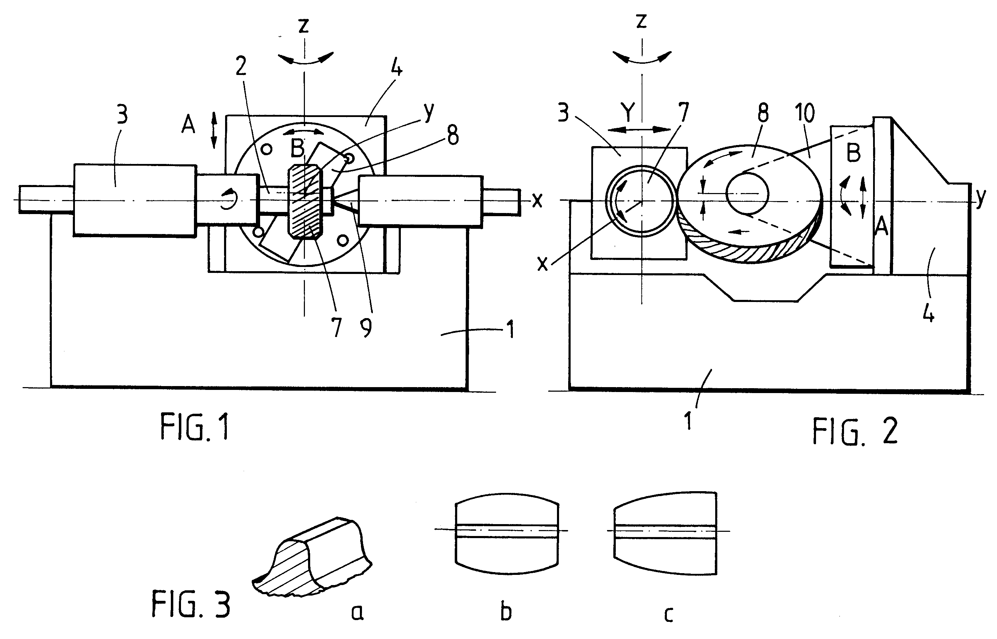

Die mit der Bezugsziffer 1 bezeichnete Vorrichtung weist Einzelantriebe 3, 4 auf, welche in einer in den Figuren 1 und 2 nicht dargestellten elektronischen Zwanglaufsteuerung ansteuerbar sind. Auf der Welle 2 des Einzelantriebes 3 ist ein Zahnrad auf einem nicht dargestellten Futter aufgespannt und mit einer Pinole 9 gegengelagert. Das Werkstück 7 ist entlang der Drehachse x der Welle 2 in axialer Richtung x verlagerbar und quer dazu in Richtung auf das Schabrad 8 entlang der Zentrumslinie y verlagerbar.

In einer neutralen Stellung bildet die Zentrumslinie die Verbindung zwischen dem Zentrum des Zahnrades 7 und des Schabrades 8 aus. In der in den Figuren 1 und 2 dargestellten, nicht neutralen Stellung, ist das Schabrad 8, welches von einem verlagerbaren Lagerbock gehaltert ist um einen Abstand s gegenüber der Zentrumsachse y verlagert. Sowohl die Verlagerbarkeit X des Werkstücks 7 als auch die Verlagerbarkeit Y in Richtung der Zentrumslinie und die Verlagerbarkeit A des Werkzeuges entlang der Schiftachse quer zur Zentrumslinie und quer zur Werkzeugswelle x können von der Zwangssteuerung variierbar sein.

Es sind aber auch Ausgestaltungen der Erfindung vorgesehen, bei denen nur eine oder ein Teil aller möglichen Zustellvariationen von der Zwanglaufsteuerung übernommen werden und die anderen vom CNC-Prozeßrechner selbst gesteuert werden.

Weiterhin ist vorgesehen, daß das Werkstück um eine Achse z, welche quer zur Werkstückwelle x und quer zur Zentrumsachse y angeordnet ist, in der Zeichnung mit C bezeichnet, schwenkbar ist.

Zur Ausbildung von insbesondere Schrägverzahnungen kann das Schabrad um die Zentrumsachse y verschwenkt und in der Schwenkstellung festgestellt werden. In den Zeichnungen ist diese Schwenkbewegung mit B bezeichnet.

In der Figur 3 sind Beispiele von verschiedenen Zahnflankenprofilierungen dargestellt. Figur 3b zeigt stark vergrößert eine beidseitig ballige Ausgestaltung einer Zahnflanke und Figur 3c zeigt eine einseitig ballige Ausgestaltung einer Zahnflanke. Hierzu ist ganz allgemein eine Relativverlagerung zwischen drehantreibbarem Werkzeug und drehantreibbarem Werkstück in drei Achsen zueinander gegeben, wobei sich die Achsen von Werkstück und Werkzeug windschief zueinander stehen können. Speziell soll aber zur Erzielung der Balligkeit das Werkstück 7 in Richtung seiner Drehachse x von der Zwangslaufsteuerung gesteuert verlagerbar sein. Entsprechend der axialen Position wird dann von der Zwanglaufsteuerung der Gleichlauf variiert. So wird beispielsweise an den Außenbereichen der Zahnflanken schrittweise oder quasi kontinuierlich die Phasenlage derart verändert, daß dort zur Erzielung balliger Flankenformen mehr Material abgetragen wird.

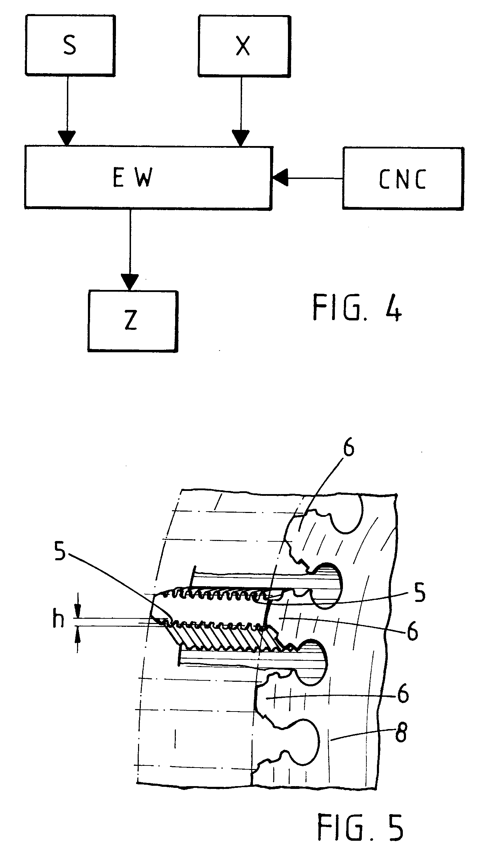

Die Funktionsweise der Vorrichtung ist die folgende:
Das Schabrad wird mit einer vorbestimmten Drehzahl welche im Bereich zwischen 50 und 200 Umdrehungen pro Minute liegt, bevorzugt jedoch in einem Bereich von 100 bis 120 Umdrehungen pro Minute, angetrieben. Auf der Welle des Werkzeuges ist ein Drehpositiongeber angeordnet, welcher beispielsweise in Form von Impulsen, die von der Zwangssteuerungselektronik gezählt werden die genaue Winkelstellung, bzw. Drehzahl des Werkstücks angibt. Entsprechend einer von einem CNC-Prozeßrechner vorgegebenen Gleichlaufbedingung wird der Drehantrieb des Werkstücks nachgeregelt. Hierzu werden Istwerte eines Drehpositionsgebers auf der Werkstückwelle verglichen mit den von der Zwangssteuerungselektronik berechneten Sollwerten und der Drehantrieb entsprechend nachgeregelt. Die Aktuallisierung der Winkelstellung bzw. Drehzahl der Werkstückwelle ist innerhalb von einer Millisekunde möglich. Entsprechend der digitalen Aufbereitung von Istwert und Sollwert ist eine Phasenverschiebung (Gleichlaufvariation) nur in kleinen Schritten möglich. Diese Schritte sind jedoch um ein Vielfaches kleiner als die Höhe h der Schabrippen 5 des Schabrades 8, welche sich an den Flanken eines jeden Zahnes 6 eines in Figur 5 ausschnittsweise dargestellten Schabrades 8 befinden. Wobei die Höhe h der Schabrippe die charakteristische Größe ist für die Abrasivität der Werkzeug-/Schab-Fläche.

Zur Fertigung von sondergeformten Zahnflanken, beispielsweise ballig geformten Zahnflanken, wobei die Balligkeit aber nur einige Micrometer beträgt, wird die Drehposition bzw. Drehgeschwindigkeit des Werkstücks nicht nur in Abhängigkeit von der Drehposition bzw. Drehzahl des Werkzeuges nachgeregelt, sondern zusätzlich auch noch von einer Vorschubstellung des Werkstücks. Im Ausführungsbeispiel wird diese Vorschubstellung durch die Verlagerung X des Werkstückes 7 axial zu seiner Drehachse x gebildet. Vorgesehen ist aber auch eine Verlagerung C oder Y oder eine Kombination von Zustellvariationen derart als Master-Antrieb zu ziehen, wobei auch mehrere zusätzliche Master-Antriebes eingeschlossen sind. Entsprechend der vom CNC-Prozeßrechner gegebenen Vorgaben variiert die elektronischen Zwanglaufsteuerung die Phasenverschiebung gemäß den Istwerten von Schabrad und axialer Werkstückposition.

In Figur 4 ist schematisch die Steuerung dargestellt. Vom mit CNC bezeichneten CNC-Prozeßrechner erhält die Zwanglaufsteuerung EW eine Vorgabe. Die Position des Zahnrades Z wird als Slave entsprechend der Eingangsgrößen, Winkelposition bzw. Winkelgeschwindigkeit S des Schabrades und axiale Verlagerungsstellung X des Werkstückes eingeregelt. S und X fungieren dabei als Master.

Die elektronische Zwanglaufsteuerung EW ist als selbständiger Microrechner ausgebildet, welcher mit dem CNC-Prozeßrechner über eine Schnittstelle verbunden ist. Zur Anwendung kommen hier insbesondere Microprozessoren der Bauart Intell 386 mit entsprechender Peripherie. Die Steuerung und Regelung besorgt dabei eine Steuer/-Regelungssoftware. Die Software kann entweder in Maschinensprache geschrieben sein, oder aber auch in einer Hochsprache, jedoch wird in jedem Fall ein selbsttätig laufendes Maschinenprogramm verwandt, eine Interpreterlösung ist nicht bevorzugt. Durch den separaten Steuer/Regelrechner welcher die Zwangssteuerung EW ausbildet sind sehr kleine Zykluszeiten möglich. Durch die zwei Master-Slavesteuerung ist eine Änderung des Drehzahlverhältnisses von Werkstück und Werkzeug in -geringem Maße- entsprechend der axialen Position des Werkstückes möglich. Dadurch ist beispielsweise eine größere Phasenverschiebung an den Zahnflankenenden ermöglicht. Durch diese größere Phasenverschiebung ist dort aufgrund der Elastizität der Antriebsmotoren eine größere Kraftbeaufschlagung vorhanden.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Vorrichtung zum Feinbearbeiten der Verzahnung von Zahnrädern, mit einer Halterung für ein Werkzeugrad und einem Futter für ein im Gleichlauf dazu laufendes zu bearbeitendes Zahnrad (Werkstück), wobei eine Relativverlagerung von drehantreibbarem Werkzeug und drehantreibbarem Werkstück zueinander gegeben ist, derart, daß die Achsen von Werkstück und Werkzeug sich beabstandend kreuzen, dadurch gekennzeichnet, daß das Werkstück (7) auf der Welle (2) eines eigenen elektrischen Drehantriebes aufnehmbar ist und daß die Drehantriebe für das als Schabrad (8) gestaltete Werkzeug und das Werkstück (7) als elektrisch gekoppelte Einzelantriebe (3, 4) ausgebildet sind, derart, daß ihr Gleichlauf über eine elektronische Zwanglaufsteuerung in kleineren Schritten als die Höhe (h) der Schabrippen (5) des Schabrades (8) variierbar ist.

2. Vorrichtung nach Anspruch 1 oder insbesondere danach, dadurch gekennzeichnet, daß der Gleichlauf entsprechend einer variierbaren Vorschubstellung des Werkstücks (7) von der Zwanglaufsteuerung variierbar ist.

3. Vorrichtung nach einem oder mehreren der vorhergehenden Ansprüche oder insbesondere danach, dadurch gekennzeichnet, daß der Vorschub des Werkstücks (7) durch seine zu seiner Drehachse (x) parallelen Verlagerung (X) gebildet wird.

4. Vorrichtung nach einem oder mehreren der vorhergehenden Ansprüche oder insbesondere danach, dadurch gekennzeichnet, daß der Eingriffspunkt des Werkzeuges am Zahn des Werkstücks (7) von der Zwangssteuerung variierbar ist, beispielsweise durch Schiftachsenantrieb (A).

5. Vorrichtung nach einem oder mehreren der vorhergehenden Ansprüche oder insbesondere danach, gekennzeichnet durch eine von der Zwangssteuerung veranlaßte Zustellung (Y) des Werkstücks (7) auf das Zentrum des Werkzeuges (8).

6. Vorrichtung nach einem oder mehreren der vorhergehenden Ansprüche oder insbesondere danach, gekennzeichnet durch eine von der Zwangssteuerung variierbaren Zustellung des Werkstücks (7) durch Verschwenken (C) der Werkstückachse (x) um eine zu ihr und zur Zentrumsachse (y) quer angeordneten Schwenkachse (z).

7. Vorrichtung nach einem oder mehreren der vorhergehenden Ansprüche oder insbesondere danach, dadurch gekennzeichnet, daß die Werkzeugachse um die Zentrumsachse (y) schwenkbar und feststellbar ist, welche rechtwinklig zur Drehachse (x) des Werkstücks verläuft und die Werkzeugachse rechtwinklig schneidet.

8. Vorrichtung nach einem oder mehreren der vorhergehenden Ansprüche oder insbesondere danach, dadurch gekennzeichnet, daß das Werkzeug (8) und das Werkstück (7) horizontal nebeneinander angeordnet sind.

9. Vorrichtung nach einem oder mehreren der vorhergehenden Ansprüche oder insbesondere danach, dadurch gekennzeichnet, daß zur Erzielung der Gleichlaufvariation der Motor einer der elektrisch gekoppelten Einzelantriebe (3, 4) um seine Achse schwenkbar ist.

10. Vorrichtung nach einem oder mehreren der vorhergehenden Ansprüche oder insbesondere danach, dadurch gekennzeichnet, daß zur Erzielung der Gleichlaufvariation einem der elektrisch gekoppelten Einzelantriebe (3, 4) ein Differenzialgetriebe zugeordnet ist.

11. Vorrichtung nach einem oder mehreren der vorhergehenden Ansprüche oder insbesondere danach, dadurch gekennzeichnet, daß die elektrische Zwangslaufsteuerung von einem CNC-Prozeßrechner ansteuerbaren, separaten Steuerrechner (EW) ausgebildet ist.

12. Verfahren zum Schabbearbeiten der Verzahnung von Zahnrädern, dadurch gekennzeichnet, daß das Verhältnis zwischen Werkstückdrehzahl und Werkzeugdrehzahl geringfügig größer oder kleiner als das Übersetzungsverhältnis von Schabrad und Werkrad ist, so daß durch das verdrehende Zustellen von Werkzeug relativ zum Werkstück die Spanabnahme nur jeweils lediglich an einer der Zahnseiten erfolgt.

FIG. 1

FIG. 2

FIG. 3

a    b    c

EP 0 515 791 A2

FIG. 4

FIG. 5